# EUROPEAN PATENT APPLICATION

(11) **EP 4 545 368 A1**
(43) Date of publication of application: **30.04.2025**
(21) Application number: 23205710.9
(22) Date of filing: 25.10.2023
(51) Int. Cl.: B60T 1/06, B60T 7/12, B60T 7/18

(54) **A VEHICLE AUXILIARY BRAKING SYSTEM COMPRISING A CARBON BRAKE ARRANGEMENT**

(71) Applicant: VOLVO TRUCK CORPORATION, 405 08 Göteborg (SE)
(72) Inventor: STJERNBERG, Oscar, 411 35 GÖTEBORG (SE); WILHELMSSON, Martin, 423 39 TORSLANDA (SE)
(74) Representative: Kransell & Wennborg KB

(57) **Abstract**

The disclosure relates to a vehicle auxiliary braking system (100), comprising a carbon brake arrangement (200), the carbon brake arrangement (200) comprising a rotatable carbon brake disc (202) operably connectable to at least one wheel of a vehicle (10), and brake pads (206) operable to engage with the rotatable carbon brake disc (202), the vehicle auxiliary braking system (100) further comprising a control unit comprising processing circuitry (1002) configured to determine a time period for an upcoming vehicle braking operation to be initiated at a brake start position at future point in time, and control the brake pads (206) to engage with the rotatable carbon brake disc (202) at the brake start position in response to the time period exceeding a predetermined threshold time period.

## Description

### TECHNICAL FIELD

The disclosure relates generally to vehicle braking systems. In particular aspects, the disclosure relates to a vehicle braking system comprising a carbon brake arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle braking systems are critical components of any automobile, responsible for slowing down or stopping the vehicle's motion. The vehicle braking systems conventionally comprises service brakes as well as auxiliary brakes. The auxiliary brake may, e.g. be a retarder using a turbine arranged in an oil bath. Such retarder is a heavy component and may not sustain sufficient heat. There is thus a desire to provide a vehicle auxiliary braking system with a reduced weight and which can sustain a higher temperature level generated during use.

### SUMMARY

According to a first aspect of the disclosure, there is provided a vehicle auxiliary braking system, comprising a carbon brake arrangement, the carbon brake arrangement comprising a rotatable carbon brake disc operably connectable to at least one wheel of a vehicle, and brake pads operable to engage with the rotatable carbon brake disc, the vehicle auxiliary braking system further comprising a control unit comprising processing circuitry configured to determine a time period for an upcoming vehicle braking operation to be initiated at a brake start position at future point in time, and control the brake pads to engage with the rotatable carbon brake disc at the brake start position in response to the time period exceeding a predetermined threshold time period.

The first aspect of the disclosure may seek to provide an improved auxiliary braking arrangement with a reduced weight in comparison to e.g. a conventional retarder, which improved auxiliary braking arrangement can withstand high temperatures generated during braking. A technical benefit may thus include that a low weight and brake efficient auxiliary braking arrangement is provided.

The carbon brake disc should be construed as being manufactured from a carbon material. In particular, carbon brake discs are typically composed of carbon fibers embedded in a matrix material, commonly referred to as a carbon-carbon composite. The exact composition can vary, but it generally includes carbon fibers and a carbon matrix. In addition, fillers and additives may also be included to enhance the performance and properties of the brake disc. The carbon fibers are preferably high-strength carbon fiber, that form the primary structural component of the brake disc. These fibers are often derived from materials such as, but not limited to, polyacrylonitrile (PAN) or pitch. The fibers provide the disc with its high tensile strength and heat resistance. Moreover, the carbon matrix, which may also be known as a carbonaceous binder, preferably surrounds and binds the carbon fibers together. The carbon matrix may typically be a carbon-rich material derived from organic sources, such as, but not limited to, phenolic resin or pitch. Further, the fillers and additives may include silicon carbide, graphite, and other materials that improve wear resistance, thermal conductivity, and friction characteristics. The specific composition and manufacturing processes can vary based on e.g. the intended use of the brake disc, but carbon-carbon composites are known for their relatively high heat resistance, low thermal expansion, and high strength.

As indicated above, the carbon brake arrangement has a high heat resistance, i.e. the carbon brake arrangement can be exposed to a relatively high temperature level. Thus, the carbon brake arrangement will not wear and tear in response to the temperature level it is being exposed. On the contrary, the carbon brake arrangement rather wear and tear by the number of times they are used, but not based on the duration of a brake engagement process. Hence, a high frequency of braking operations with short braking interactions will generate more wear and tear for the carbon brake arrangement compared to a low frequency of braking operations with longer time of braking interactions. The present disclosure reduces wear and tear of the carbon brake arrangement by predictively determining that the upcoming braking operation is of a substantive character, i.e. the vehicle will need to engage the brake for a substantial duration. When it is determined that the vehicle braking operation will continue for a rather extensive duration, it can be determined that the brake pads of the carbon brake arrangement should engage with the carbon brake disc for the upcoming braking operation. By predictively determining the time period for the upcoming vehicle operation, the processing circuitry may advantageously prepare the vehicle for the braking operation using a suitable braking system. Accordingly, should the time period be below the predetermined threshold time period, the processing circuitry preferably controls the vehicle to maintain a desired vehicle speed at the upcoming vehicle braking operation using another braking system, such as e.g. the service brakes and/or controlling an electric traction motor to generate electric energy.

Optionally in some examples, including in at least one preferred example, wherein the processing circuitry is further configured to determine a brake end position at which the upcoming vehicle braking operation will end, and control the brake pads to engage with the rotatable carbon brake disc for the entire duration of the vehicle braking operation from the brake start position to the brake end position. A technical benefit may include that, since wear and tear of a carbon brake disc is independent upon the duration of engagement, the carbon brake pads can engage with the carbon brake disc during the entire duration of the braking operation, thereby reduce wear and tear of other braking systems, since a brake interaction using such other braking system can be reduced.

Optionally in some examples, including in at least one preferred example, wherein the processing circuitry is further configured to control the brake pads to release from the rotatable brake disc at the brake end position.

Optionally in some examples, including in at least one preferred example, wherein the processing circuitry is further configured to determine a vehicle weight, wherein the predetermined threshold time period is adjusted in response to the vehicle weight. A technical benefit may include that weight affects the level of brake power to apply to obtain a desired vehicle speed, whereby it can be allowed to adjust the predetermined threshold time period can be allowed to be adjusted in response to the vehicle weight.

Optionally in some examples, including in at least one preferred example, wherein the predetermined threshold time period is reduced in response to an increased vehicle weight compared to a nominal vehicle weight, and increased in response to a lower vehicle weight compared to the nominal vehicle weight. A technical benefit may include that the processing circuitry may allow for a carbon brake intervention for a shorter time period increased vehicle weight to obtain the desired vehicle speed.

Optionally in some examples, including in at least one preferred example, wherein the processing circuitry is further configured to determine a vehicle speed at the brake start position, wherein the predetermined threshold time period is adjusted in response to the vehicle speed at the brake start position. A technical benefit may include that vehicle speed may affect the level of power the service brakes need to absorb to reduce the speed to a desired vehicle speed. It can therefore be advantageous to allow for an adjusted predetermined threshold time period for carbon brake intervention in response to the vehicle speed.

Optionally in some examples, including in at least one preferred example, wherein the predetermined threshold time period is increased for an increased vehicle speed compared to a nominal vehicle speed, and reduced for a reduced vehicle speed compared to the nominal vehicle speed. A higher vehicle speed will generate a higher energy absorption of the service brakes, whereby the carbon brake arrangement can be controlled to reduce the vehicle speed for shorter time periods of braking, while the carbon brake arrangement may not need to intervene for lower vehicle speeds.

Optionally in some examples, including in at least one preferred example, wherein the processing circuitry is configured to determine the time period for the upcoming vehicle braking operation in response to sensor received data.

Optionally in some examples, including in at least one preferred example, wherein the sensor received data is received from a Global Navigation Satellite System, GNSS.

Optionally in some examples, including in at least one preferred example, wherein the GNSS is a Global Positioning System, GPS.

Optionally in some examples, including in at least one preferred example, wherein the processing circuitry is configured to determine the time period for the upcoming vehicle braking operation by receiving data from a look-up table. A technical benefit may include that data stored in the vehicle or in a cloud can be rapidly used. The look-up table can have information of a previous vehicle braking operation ahead of the vehicle. Preferably, the position of the vehicle should be known when receiving data indicative of the time period for the upcoming vehicle braking operation from the look-up table.

Optionally in some examples, including in at least one preferred example, wherein the rotatable carbon brake disc is connectable to a propeller shaft of the vehicle. A technical benefit may include that all wheels connected to the propeller shaft is controlled when braking using the carbon brake arrangement. Further, connecting the carbon brake arrangement to the propeller shaft may reduce the need of using an additional clutch or gearbox.

According to a second aspect, there is provided a vehicle comprising a vehicle auxiliary braking system of any one of the examples described above in relation to the first aspect.

The vehicle is preferably a land based vehicle. Such land based vehicle is preferably a heavy duty vehicle, such as a truck. The land based vehicle may also be a working machine or a bus.

Optionally in some examples, including in at least one preferred example, the vehicle further comprising an electric traction motor, the electric traction motor being configured to apply a traction force to at least one wheel of the vehicle during propulsion and to generate electric power during braking. The electric traction motor may advantageously be used in combination with the carbon brake arrangement to obtain an energy efficient brake blending operation at the upcoming vehicle braking operation.

Optionally in some examples, including in at least one preferred example, wherein the processing circuitry is further configured to determine a level of electric energy recoverable by the electric traction motor at the upcoming vehicle braking operation, and control the brake pads to engage with the rotatable carbon brake disc at the brake start position in conjunction with braking using the electric traction motor in response to the time period exceeding a predetermined threshold time period. The electric energy is preferably recoverable by an energy storage system, such as e.g. a high-voltage battery. A technical benefit may include that a state of charge level of the energy storage system can be controlled to obtain a maximum state of charge level at the end of the vehicle braking operation.

Optionally in some examples, including in at least one preferred example, wherein the processing circuitry is further configured to determine a total brake power level required to maintain a desired vehicle speed during the upcoming vehicle braking operation, determine a motor brake power level obtainable by the electric traction motor during the upcoming vehicle braking operation, and during the upcoming vehicle braking operation control the electric traction motor to apply the motor brake power level, and control the brake pads to apply a force on the rotatable carbon brake disc to obtain a brake power of the carbon brake arrangement corresponding to a difference between the total brake power level and the motor brake power level. Hereby, the processing circuitry may advantageously control a brake force applied by the brake pads onto the carbon brake disc in combination with controlling the electric traction motor such as to optimize the state of charge level of the energy storage system.

Effects and features of the second aspect are largely analogous to those described above in relation to the first aspect.

According to a third aspect, there is provided a computer implemented method of controlling a vehicle auxiliary braking system, the computer implemented method comprising receiving, by a processing circuitry of a computer system, data indicative of a time period for an upcoming vehicle braking operation to be initiated at a brake start position at future point in time, and controlling, by the processing circuitry, brake pads of a carbon brake arrangement to engage with the rotatable carbon brake disc of the carbon brake arrangement at the brake start position in response to the time period exceeding a predetermined threshold time period.

Effects and features of the third aspect are largely analogous to those described above in relation to the first and second aspects.

According to a fourth aspect, there is provided a computer program product comprising program code for performing, when executed by the processing circuitry, the method of the above described third aspect.

According to a fifth aspect, there is provided a non-transitory computer-readable storage medium comprising instructions, which when executed by the processing circuitry, cause the processing circuitry to perform the method of the above described third aspect.

Effects and features of the fourth and fifth aspects are largely analogous to those described above in relation to the first aspect and second aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle in the form of a truck according to an example,
Fig. 2 is an exemplary illustration of a vehicle auxiliary braking system according to an example,
Fig. 3 is an exemplary operating condition of the vehicle according to an example,
Fig. 4 is an exemplary flow chart of controlling the carbon brake arrangement, and
Fig. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following may seek to mitigate the problem of using heavy retarder brakes for auxiliary braking operations. A technical advantage may include that a lower weight of the auxiliary braking arrangement is provided which low weight auxiliary braking arrangement may still enable for highly efficient and durable braking operations when used according to the examples described in the following.

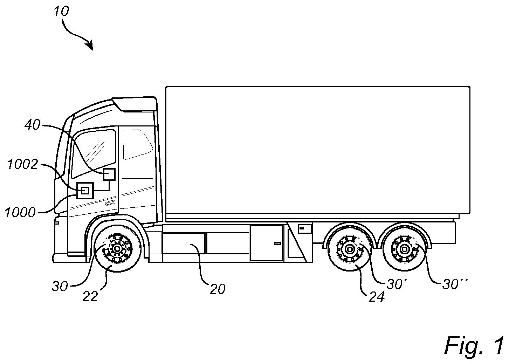

Reference is made to Fig. 1 which is an exemplary illustration of a vehicle 10 in the form of a truck according to an example. The vehicle 10 preferably comprises at least one electric traction motor 20 for propulsion. In Fig. 1, the vehicle 10 is depicted as comprising an engine 20, such as in the form of an electric traction motor for propelling the vehicle 10. The engine 20 may be connected to the foremost pair of rear wheels 24. Other alternatives are of course conceivable, such as connecting the engine to the front wheels 22 and/or to both the front pair of rear wheels 24 as well as to the front wheels 22, etc. Although Fig. 1 illustrates an electrically propelled vehicle 10, the vehicle 10 may also be propelled by an engine 20 in the form of an internal combustion engine (not shown), either alone or in combination with the electric traction motor. The latter example is also conventionally referred to as a hybrid vehicle.

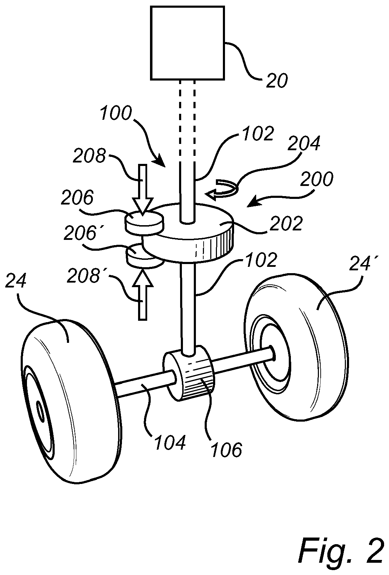

Further, the vehicle 10 comprises service brakes 30, 30', 30". In Fig. 1, the vehicle 10 comprises service brakes 30, 30', 30" for each of the wheels of the vehicle. The vehicle 10 may also control the vehicle speed by using the electric traction motor to generate electric power. Furthermore, the vehicle 10 also comprises a vehicle auxiliary braking system (100 in Fig. 2). Accordingly, the speed of the vehicle 10 may be controlled by either, or all of, the service brake(s) 30, 30', 30", the electric traction motor and the vehicle auxiliary braking system 100. The vehicle 10 also comprises a computer system 1000. The computer system comprises processing circuitry 1002 which is configured to at least control the vehicle auxiliary braking system as will be described in further detail below. Also, the vehicle 10 comprises a Global Navigation Satellite System (GNSS) 40, such as e.g. a Global Positioning System (GPS). The GNSS is electrically connected to the processing circuitry 1002 such that the processing circuitry can retrieve data indicative of e.g. a current position of the vehicle 10 as well as an upcoming position or route ahead of the vehicle 10.

In order to describe the vehicle auxiliary braking system 100 in further detail, reference is now made to Fig. 2. Fig. 2 is an exemplary illustration of a vehicle auxiliary braking system 100 according to an example. The vehicle auxiliary braking system 100 is in Fig. 2 exemplified as connected to the propeller shaft 102 of the vehicle 10. The propeller shaft 102 is in Fig. 2 exemplified as connected between the engine 20 and the pair of rear wheels 24, 24'. In particular, the pair of rear wheels 24, 24' is connected to a rear wheel axle 104 and the propeller shaft 102 is connected to the rear wheel axle 104 via a differential gear 106.

In further detail, the vehicle auxiliary braking arrangement 100 comprises a carbon brake arrangement 200. The carbon brake arrangement 200 comprises a carbon brake disc 202 operably connected to at least one wheel 24, 24' of the vehicle 10. In Fig. 2, the carbon disc 202 is exemplified as being operatively connected to the pair of rear wheels 24, 24' via the propeller shaft, the differential gear 106 and the rear wheel axle 104. Accordingly, when the propeller shaft 102 rotates 204, the carbon brake disc 202 rotates 204 along with the propeller shaft 106.

Furthermore, the carbon brake arrangement 200 also comprises brake pads 206, 206'. In particular, the carbon brake arrangement 200 comprises a pair of brake pads 206, 206', where each brake pad 206, 206' is arranged on a respective side of the carbon brake disc 202. When applying the carbon brake arrangement, the brake pads 206, 206' are operable to engage with the rotatable carbon brake disc 202. This is executed by applying a force 208, 208' on the brake pads in a direction towards the carbon brake disc 202. The force is preferably applied by a brake actuator (not shown) which receives brake instructions from the above described processing circuitry.

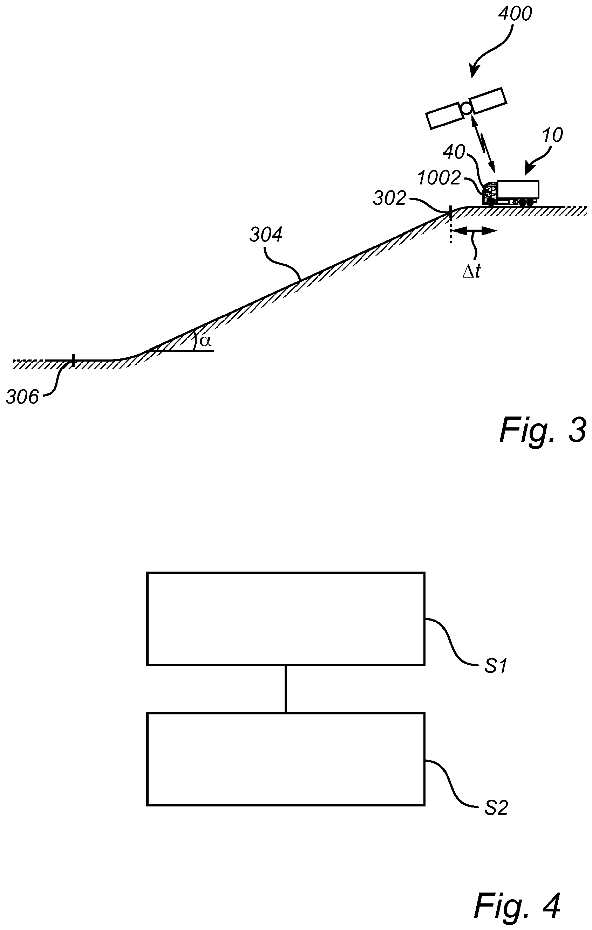

As described above in the summary, the carbon brake arrangement 200 has a high heat resistance, i.e. the carbon brake arrangement 200 can be exposed to a relatively high temperature level. Thus, the carbon brake arrangement 200 will not wear and tear in response to the temperature level it is being exposed. On the contrary, the carbon brake arrangement 200 rather wear and tear by the number of times it is being used, but not based on the duration of a brake engagement process. Hence, a high frequency of braking operations with short braking interactions will generate more wear and tear for the carbon brake arrangement 200 compared to a low frequency of braking operations with longer time of braking interactions. The following will therefore, with reference to Figs. 3 and 4, describe braking strategies advantageously operable by the present disclosure to achieve efficient auxiliary braking performance in combination with a prolonged operational lifetime of the carbon brake disc arrangement 200.

During operation of the vehicle 10, the processing circuitry 1002 determines S1 a time period for an upcoming vehicle braking operation to be initiated at a brake start position 302 at future point in time Δt. The brake pads 206 of the carbon brake arrangement 200 are thereafter, when the vehicle 10 arrives at the brake start position 302 controlled S2 to engage with the rotatable carbon brake disc 202 in response to the time period for upcoming vehicle braking operation exceeding a predetermined threshold time period. The predetermined threshold time period may, as a non-limiting example, be about 10 seconds. Preferably, the predetermined threshold time period may be 7 seconds. More preferably, the predetermined threshold time period may be 5 seconds. In further detail, and according to an example, the time period for the upcoming vehicle braking operation may be determined by the processing circuitry 1002 in response to data received from the GNSS 40, which is communicating with a satellite 400. The GNSS 40 may thus receive data from the satellite 400 with an indication of e.g. a downward slope 304 ahead of the vehicle 10, and at which downhill slope the vehicle 10 will be driving at the future point in time Δt. In response to the data received from the GNSS, the processing circuitry 1002 may also determine an angle α of the slope 304, such as e.g. an average angle of the slope 304, as well as a distance of the slope 304. It should however be readily understood that the processing circuitry 1002 may solely determine the current position of the vehicle 10 in response to the data received from the GNSS, and determine the time period of the upcoming vehicle braking operation from a look-up table containing position data and time periods of vehicle braking operations for a plurality of geographic positions. The processing circuitry 1002 may also be configured to determine the time period for the upcoming vehicle braking operation in response to sensor received data.

Furthermore, the processing circuitry may also determine a brake end position 306. In the example depicted in Fig. 3, the brake end position 306 is positioned a distance after the downhill slope 304. The brake end position 306 is thus a position at which the upcoming vehicle braking operation will end. The processing circuitry 1002 may thus determine the brake start position 302 and the brake end position 306 before the vehicle 10 arrives at the brake start position 302. The processing circuitry 1002 may determine the time period for the upcoming vehicle braking operation by e.g. determining a first point in time at which the vehicle 10 will arrive at the brake start position 302 and a second point in time at which the vehicle will arrive at the brake end position 304. By also determining a desired vehicle speed between the brake start position 302 and the brake end position 304, the time period for travelling between the brake start position 302 and the brake end position 304 can hereby be determined. The processing circuitry 1002 may advantageously control the brake pads 206 to engage with the rotatable carbon brake disc 202 for the entire duration of the vehicle braking operation from the brake start position 302 to the brake end position 304. When the vehicle 10 subsequently arrives at the brake end position 304, the processing circuitry 1002 may preferably control the brake pads 206 to release from the brake disc 202 at the brake end position 304, i.e. when the vehicle 10 arrives at the brake end position 304.

The predetermined threshold time period should preferably not be construed as a fixed time period. For example, the processing circuitry 1002 may determine a vehicle weight, e.g. if the vehicle is laden or unladen, wherein the predetermined threshold time period can be adjusted in response to the vehicle weight. In particular, the predetermined threshold time period can be reduced in response to an increased vehicle weight compared to a nominal vehicle weight, and increased in response to a lower vehicle weight compared to the nominal vehicle weight. A higher vehicle weight may require a higher braking capacity to maintain a desired vehicle speed, whereby the interaction of the carbon brake arrangement 200 may be needed. In a similar vein, the processing circuitry 1002 may also determine a vehicle speed at the brake start position 302. The predetermined threshold time period may here be additionally, or as a complement, be adjusted in response to the vehicle speed at the brake start position. A higher vehicle speed may require a higher braking capacity to maintain a desired vehicle speed, whereby the interaction of the carbon brake arrangement 200 may be needed. Thus, the predetermined threshold time period may be increased for an increased vehicle speed compared to a nominal vehicle speed, and reduced for a reduced vehicle speed compared to the nominal vehicle speed.

Furthermore, the carbon brake arrangement 200 may also advantageously be used in brake blending operations for the vehicle 10, i.e. braking operation where more than one brake system is used for maintaining a desired vehicle speed. In particular, and for a vehicle propelled at least by an electric traction motor, the processing circuitry 1002 may determine a level of electric energy recoverable by the electric traction motor at the upcoming vehicle braking operation. The processing circuitry 1002 may thereafter control the brake pads 206 of the carbon brake arrangement 200 to engage with the rotatable carbon brake disc 202 at the brake start position 302 in conjunction with braking using the electric traction motor in response to the above described time period exceeding the predetermined threshold time period. In yet further detail, and according to an example, the processing circuitry 1002 may determine a total brake power level required to maintain the desired vehicle speed during the upcoming vehicle braking operation, i.e. from the brake start position 302 to the brake end position 306. The processing circuitry 1002 may also determine a motor brake power level obtainable by the electric traction motor during the upcoming vehicle braking operation. Hence, the processing circuitry 1002 here determines how much brake power that can be obtained by the electric traction motor. The motor brake power level may be determined, for example, in response to a power absorption capability of a high-voltage vehicle battery and/or the maximum brake power capability of the electric traction motor. The power absorption capability may, for example, be based on the state of charge level of the high-voltage vehicle battery when the vehicle arrives at the brake start position 302. A higher state of charge level may cause the high-voltage vehicle battery to reduce its power absorption capability. When the vehicle 10 subsequently arrives at the brake start position 302, the processing circuitry 1002 may control the electric traction motor to apply the motor brake power level. In addition, the processing circuitry 1002 may also control the brake pads 206 to apply a force 208 on the rotatable carbon brake disc 202 to obtain a brake power of the carbon brake arrangement 200. The brake power of the carbon brake arrangement 200 preferably corresponds to a difference between the total brake power level and the motor brake power level. Hereby, an optimum brake blending operation is obtained where the total brake power level is applied to the combination of brakes.

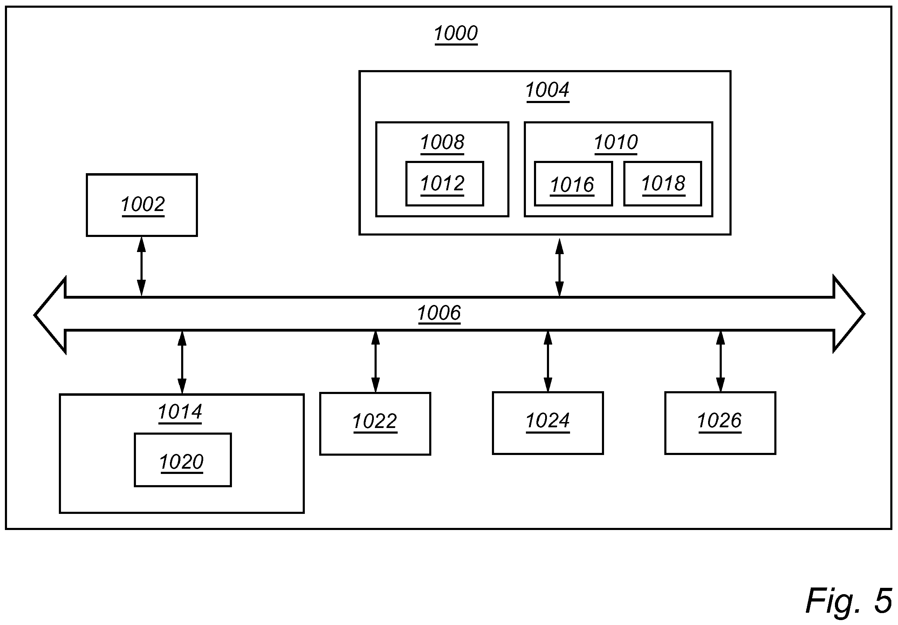

Fig. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A vehicle auxiliary braking system, comprising a carbon brake arrangement, the carbon brake arrangement comprising a rotatable carbon brake disc operably connectable to at least one wheel of a vehicle, and brake pads operable to engage with the rotatable carbon brake disc, the vehicle auxiliary braking system further comprising a control unit comprising processing circuitry configured to determine a time period for an upcoming vehicle braking operation to be initiated at a brake start position at future point in time, and control the brake pads to engage with the rotatable carbon brake disc at the brake start position in response to the time period exceeding a predetermined threshold time period.

Example 2. The vehicle auxiliary braking system of example 1, wherein the processing circuitry is further configured to determine a brake end position at which the upcoming vehicle braking operation will end, and control the brake pads to engage with the rotatable carbon brake disc for the entire duration of the vehicle braking operation from the brake start position to the brake end position.

Example 3. The vehicle auxiliary braking system of example 2, wherein the processing circuitry is further configured to: control the brake pads to release from the rotatable brake disc at the brake end position.

Example 4. The vehicle auxiliary braking system of any one of the preceding examples, wherein the processing circuitry is further configured to: determine a vehicle weight, wherein the predetermined threshold time period is adjusted in response to the vehicle weight.

Example 5. The vehicle auxiliary braking system of example 4, wherein the predetermined threshold time period is reduced in response to an increased vehicle weight compared to a nominal vehicle weight, and increased in response to a lower vehicle weight compared to the nominal vehicle weight.

Example 6. The vehicle auxiliary braking system of any one of the preceding examples, wherein the processing circuitry is further configured to: determine a vehicle speed at the brake start position, wherein the predetermined threshold time period is adjusted in response to the vehicle speed at the brake start position.

Example 7. The vehicle auxiliary braking system of example 6, wherein the predetermined threshold time period is increased for an increased vehicle speed compared to a nominal vehicle speed, and reduced for a reduced vehicle speed compared to the nominal vehicle speed.

Example 8. The vehicle auxiliary braking system of any one of the preceding examples, wherein the data indicative of the time period for the upcoming vehicle braking operation is sensor received data.

Example 9. The vehicle auxiliary braking system of example 8, wherein the sensor received data is received from a Global Navigation Satellite System, GNSS.

Example 10. The vehicle auxiliary braking system of example 9, wherein the GNSS is a Global Positioning System, GPS.

Example 11. The vehicle auxiliary braking system of any one of the preceding examples, wherein the data indicative of the time period for the upcoming vehicle braking operation is received from a look-up table.

Example 12. The vehicle auxiliary braking system of any one of the preceding examples, wherein the rotatable carbon brake disc is connectable to a propeller shaft of the vehicle.

Example 13. A vehicle comprising a vehicle auxiliary braking system of any one of the preceding examples.

Example 14. The vehicle of example 13, further comprising an electric traction motor, the electric traction motor being configured to apply a traction force to at least one wheel of the vehicle during propulsion and to generate electric power during braking.

Example 15. The vehicle of example 14, wherein the processing circuitry is further configured to: determine a level of electric energy recoverable by the electric traction motor at the upcoming vehicle braking operation, and control the brake pads to engage with the rotatable carbon brake disc at the brake start position in conjunction with braking using the electric traction motor in response to the time period exceeding a predetermined threshold time period.

Example 16. The vehicle of example 15, wherein the processing circuitry is further configured to determine a total brake power level required to maintain a desired vehicle speed during the upcoming vehicle braking operation, determine a motor brake power level obtainable by the electric traction motor during the upcoming vehicle braking operation, and during the upcoming vehicle braking operation: control the electric traction motor to apply the motor brake power level, and control the brake pads to apply a force on the rotatable carbon brake disc to obtain a brake power of the carbon brake arrangement corresponding to a difference between the total brake power level and the motor brake power level.

Example 17. A computer implemented method of controlling a vehicle auxiliary braking system, the computer implemented method comprising: receiving, by a processing circuitry of a computer system, data indicative of a time period for an upcoming vehicle braking operation to be initiated at a brake start position at future point in time, and controlling, by the processing circuitry, brake pads of a carbon brake arrangement to engage with the rotatable carbon brake disc of the carbon brake arrangement at the brake start position in response to the time period exceeding a predetermined threshold time period.

Example 18. A computer program product comprising program code for performing, when executed by the processing circuitry, the method of example 17.

Example 19. A non-transitory computer-readable storage medium comprising instructions, which when executed by the processing circuitry, cause the processing circuitry to perform the method of example 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle auxiliary braking system, comprising a carbon brake arrangement, the carbon brake arrangement comprising a rotatable carbon brake disc operably connectable to at least one wheel of a vehicle, and brake pads operable to engage with the rotatable carbon brake disc, the vehicle auxiliary braking system further comprising a control unit comprising processing circuitry configured to:
- determine a time period for an upcoming vehicle braking operation to be initiated at a brake start position at future point in time, and
- control the brake pads to engage with the rotatable carbon brake disc at the brake start position in response to the time period exceeding a predetermined threshold time period.

2. The vehicle auxiliary braking system of claim 1, wherein the processing circuitry is further configured to:
- determine a brake end position at which the upcoming vehicle braking operation will end, and
- control the brake pads to engage with the rotatable carbon brake disc for the entire duration of the vehicle braking operation from the brake start position to the brake end position.

3. The vehicle auxiliary braking system of claim 2, wherein the processing circuitry is further configured to:
- control the brake pads to release from the rotatable brake disc at the brake end position.

4. The vehicle auxiliary braking system of any one of the preceding claims, wherein the processing circuitry is further configured to:
- determine a vehicle weight, wherein the predetermined threshold time period is adjusted in response to the vehicle weight.

5. The vehicle auxiliary braking system of claim 4, wherein the predetermined threshold time period is reduced in response to an increased vehicle weight compared to a nominal vehicle weight, and increased in response to a lower vehicle weight compared to the nominal vehicle weight.

6. The vehicle auxiliary braking system of any one of the preceding claims, wherein the processing circuitry is further configured to:
- determine a vehicle speed at the brake start position, wherein the predetermined threshold time period is adjusted in response to the vehicle speed at the brake start position, wherein the predetermined threshold time period is increased for an increased vehicle speed compared to a nominal vehicle speed, and reduced for a reduced vehicle speed compared to the nominal vehicle speed.

7. The vehicle auxiliary braking system of any one of the preceding claims, wherein the processing circuitry is configured to determine the time period for the upcoming vehicle braking operation in response to sensor received data.

8. The vehicle auxiliary braking system of claim 7, wherein the sensor received data is received from a Global Navigation Satellite System, GNSS.

9. The vehicle auxiliary braking system of any one of the preceding claims, wherein the rotatable carbon brake disc is connectable to a propeller shaft of the vehicle.

10. A vehicle comprising a vehicle auxiliary braking system of any one of the preceding claims, the vehicle comprising an electric traction motor, the electric traction motor being configured to apply a traction force to at least one wheel of the vehicle during propulsion and to generate electric power during braking.

11. The vehicle of claim 10, wherein the processing circuitry is further configured to:
- determine a level of electric energy recoverable by the electric traction motor at the upcoming vehicle braking operation, and
- control the brake pads to engage with the rotatable carbon brake disc at the brake start position in conjunction with braking using the electric traction motor in response to the time period exceeding the predetermined threshold time period.

12. The vehicle of claim 11, wherein the processing circuitry is further configured to:
- determine a total brake power level required to maintain a desired vehicle speed during the upcoming vehicle braking operation,
- determine a motor brake power level obtainable by the electric traction motor during the upcoming vehicle braking operation, and during the upcoming vehicle braking operation:
- control the electric traction motor to apply the motor brake power level, and
- control the brake pads to apply a force on the rotatable carbon brake disc to obtain a brake power of the carbon brake arrangement corresponding to a difference between the total brake power level and the motor brake power level.

13. A computer implemented method of controlling a vehicle auxiliary braking system, the computer implemented method comprising:
- receiving, by a processing circuitry of a computer system, data indicative of a time period for an upcoming vehicle braking operation to be initiated at a brake start position at future point in time, and
- controlling, by the processing circuitry, brake pads of a carbon brake arrangement to engage with the rotatable carbon brake disc of the carbon brake arrangement at the brake start position in response to the time period exceeding a predetermined threshold time period.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
